# EUROPEAN PATENT SPECIFICATION

(11) **EP 3 159 158 B1**
(45) Date of publication and mention of the grant of the patent: **28.04.2021**
(21) Application number: 16193730.5
(22) Date of filing: 13.10.2016
(51) Int. Cl.: B32B 9/04, B32B 5/00, B32B 5/02, B32B 5/12, B32B 7/00, B32B 7/02, B32B 7/04, B32B 7/12, B32B 7/14, B32B 9/00, B32B 17/00, B32B 27/00, B32B 27/06, B32B 27/18, B32B 27/26, B32B 27/38, B32B 3/00, B32B 3/28, B32B 3/30

(54) **COMPOSITE MATERIAL AND METHOD OF MANUFACTURE**
KOMPOSITMATERIAL UND VERFAHREN ZUR HERSTELLUNG DAVON.
MATÉRIEL COMPOSITE ET MÉTHODE POUR SA PRODUCTION.

(30) Priority: 22.10.2015 IT UB20154899
(43) Date of publication of application: 26.04.2017
(73) Proprietor: REMUZZI CAMILLO E FIGLIO DEI F.LLI REMUZZI S.N.C., 24124 Bergamo (IT)
(72) Inventor: REMUZZI, Claudio, 24124 Bergamo (IT)
(74) Representative: Gualeni, Nadia

(56) References cited:
- EP-A1- 1 568 747
- WO-A1-02/48477
- WO-A2-2011/025191
- DE-A1- 10 300 779
- ES-A1- 2 157 157
- ES-A1- 2 157 808
- ES-A1- 2 161 643

## Description

This invention relates to a process for the manufacture of a composite material, and a composite material obtained through the aforesaid process.

The use of slabs of marble, stone, onyx or granite in construction, design and furnishings has long been known, as such materials are particularly appreciated under an aesthetic profile. E.g. prior art documents ES2157157A1, ES2161643A1, DE10300779A1 disclose methods according to the preamble of claim 1.

One of the main drawbacks affecting the diffusion of these materials is their intrinsic fragility, which makes it necessary to make high thickness slabs to prevent damage during shipping, installation or use, without breakage, in the case of objects

WO0248477 A1 discloses a method for forming marble slab-like products, characterised in that a generic marble slab of thickness between 10 and 20 millimetres is covered on one face with an adhesive and with a mesh fabric such as to form a layer on which a second slab is laid, to obtain, when resin polymerization has taken place, a composite which is machined by machine tools in order to reduce its thickness to a total thickness not exceeding 7 millimetres. WO211025191 A2 discloses the manufacture of ultrathin natural stone slabs, whereby an adhesive resin is coated on a surface of a slab layer, to form an adhesive layer.

This invention belongs to the previous context, proposing to provide a process for manufacturing a material and a material capable of overcoming the aforesaid drawbacks and, in particular, to provide a composite material of reduced thickness, but with superior mechanical characteristics with respect to the corresponding materials currently used.

This objective is achieved by means of a manufacturing process according to claim 1, and by means of a composite material according to claim 9. The claims dependent on these show preferred or advantageous embodiments.

The object of this invention will now be described in detail, with the help of the accompanying drawings, in which:
- Figure 1 shows a schematisation of a sectional view of a composite material object of this invention, according to a possible embodiment;
- Figures 2A, 2B and 2C illustrate sectional views of possible profiles of the adhesive resin in one of the steps of the process, according to different variants.

The above objective is achieved through a process for manufacturing a composite material 1 comprising steps of:
i.a) providing a pair of slabs 2, 4, made of natural stone;
i.b) optionally cleansing at least one development surface of each slab 2, 4;
ii) making one or more fabric layers 6 through the interweaving of a plurality of reinforcing fibres;
iii) applying an adhesive resin 8, 8' to at least part of the development surfaces of one or both slabs 2, 4 and/or on at least one development area of the fabric layer 6;
iv) arranging at least part of the fabric layer 6 between the slabs 2, 4, in contact with the adhesive resin 8, 8';
v) cross-linking the adhesive resin 8, 8' between said slabs 2, 4 to obtain the composite material 1, whereby the thickness of the slabs (2,4) is in the range 2.5 - 4mm.

Therefore, innovatively, the composite material of this invention can be realised through slabs of reduced thickness with respect to products currently on the market, as the fabric interposed between the slabs absorbs a part of the mechanical stresses acting on it. Especially the flexural strength of this material 1 is drastically increased.

In addition, according to a particularly advantageous aspect of the invention, in the case of a through-fracture F, F' of at least one of the slabs 2, 4, the adhesive contact with the fabric layer 6 confers a "controlled detachment" of the fractured slab portion P from said composite material 1.

In fact, the fabric 6 does not break in a fragile manner like the stone of the slabs, but is able to gradually yield under the weight of the slab portion P, for example, by gradually stretching.

In addition to that, even in the presence of a hidden the adhesive contact described previously gives the composite material greater strength.

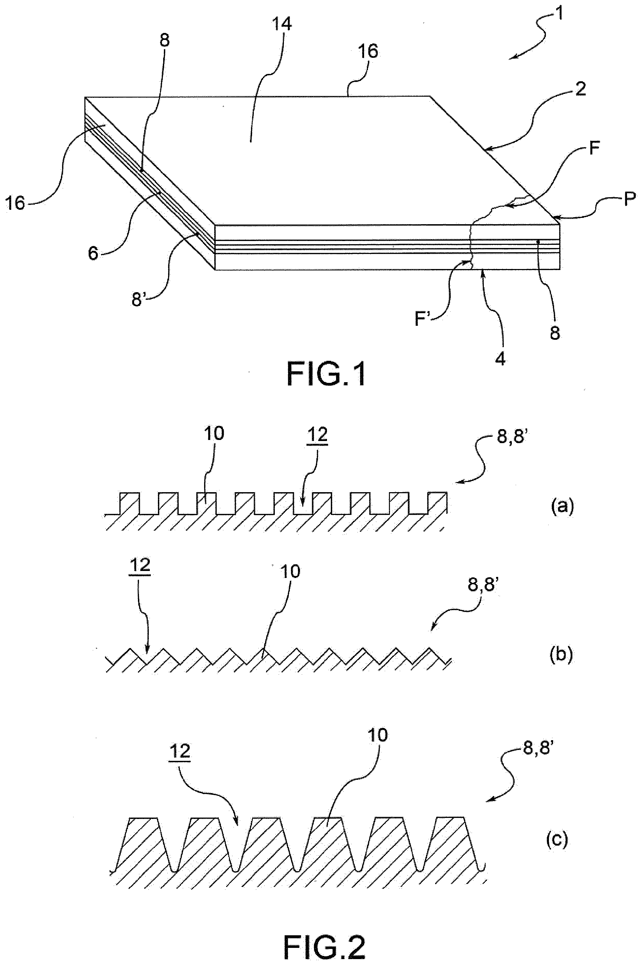

In the embodiment shown in Figure 1, the slabs 2, 4 extend along surfaces corresponding to each other (in terms of size, shape and coincidence of the perimeter).

According to a non-illustrated embodiment, one or both slabs 2, 4 could delimit an at least partially shaped outer perimeter.

In this regard, following step v), the process of this invention could comprise at least one step of mechanically working the composite material 1 (and in particular the related exposed surface 14 and/or one or more edges 16) in order to obtain the desired surface finishes and/or desired shapes of such material 1.

For example, such mechanical working could be aimed at obtaining a glossy exposed surface 14 and/or at least part of one or more edges 16 of concave or convex shape.

According to a preferred variant, the reinforcing fibres comprise glass fibres. Further variants could provide, as an alternative or in addition to glass fibres, high molecular weight polyethylene fibres, steel filaments and/or aramid fibres. In regard to the latter variant, fibres constituted by any of the materials known under the trade names of Dyneema®, Kevlar® or Technora® could be used. used.

According to a further variant, the basis weight of the single fabric layer 6, or of the plurality of fabric layers 6, is in the range of 100-500 g/m², preferably 200-400 g/m².

According to a still further variant, the adhesive resin 8, 8' comprises or consists of an epoxy resin, preferably of the bi-component type.

Advantageously, the adhesive resin 8, 8' has low viscosity.

According to the invention, both slabs 2, 4 are made of natural stone.

According to a further embodiment, one or both slabs 2, 4 consist of marble, granite, onyx.

Preferably, step iii) comprises a step of impregnation of the adhesive resin 8, 8' through at least part of the thickness of the fabric layer 6 and/or of at least one of the slabs 2, 4.

According to a possible variant, step iii) could be carried out with a means or tool configured to transmit superficially to the adhesive resin 8, 8' alternating ridges 10 and valleys 12 that promote an expulsion of air between the adhesive resin 8, 8' and the slab 8, 8' and/or the fabric layer.

In this regard, refer for example to Figure 2, which shows resin sections on which ridges/valleys have been formed of square or rectangular shape (Figure 2A), saw tooth shape (Figure 2B), or with ridges 10 of substantially trapezoidal shape (figure 2C).

For example, the aforesaid means or tool could be a roller or a toothed spatula.

According to a preferred variant, step v) is carried out for at least 24 hours at ambient temperature, namely at a temperature not exceeding 35°C. For example, step v) could be conducted for 36 to 48 hours.

According to a possible operational step of the process described above, the adhesive resin could be applied to the development surface following step i.b), and left to act for a certain period of time in order to facilitate the impregnation of the stone (step iii)).

During step iv) the fabric layer could then be laid over the development surface of the slab, and additional resin could be applied to the fabric until this layer is impregnated.

Optionally, this last operation on the fabric layer could be repeated with the desired number of layers, depending on the desired strength of the composite material.

Finally, the second slab is overlapped on the upper fabric layer, so as to complete the semi-finished product to be subjected to step v) .

This invention also covers a composite material 1.

Since a preferred embodiment provides that such material be obtained through the just illustrated process, this material could comprise all the characteristics deducible - even only implicitly - from the foregoing description.

The composite material 1 comprises a pair of slabs 2, 4 made of natural stone, one or more fabric layers 6 comprising a plurality of interwoven reinforcing fibres, and an adhesive resin 8, 8' applied to at least part of the development surfaces of one or both slabs 2, 4 and/or on at least one development surface of the fabric layer 6.

At least part of the fabric layer 6 is arranged between the slabs 2, 4 in contact with the adhesive resin 8, 8', this resin being cross-linked between the aforesaid slabs to make the composite material 1. The thickness of the slabs (2,4) is in the range of 2.5 - 4 mm, and the basis weight of the single fabric layer or the plurality of fabric layers (6), is in the range 100- 500g/m², preferably 200-400g/m².

As discussed above, in the case of a through-fracture F, F' of at least one slab 2, 4, the adhesive contact with the fabric layer 6 preferably confers a controlled detachment to the fractured slab portion P from said composite material 1.

According to possible embodiments, which can be implemented independently or jointly:
a) the adhesive resin 8, 8' comprises or consists of an epoxy resin, preferably of the bi-component type;
b) one or both slabs 2, 4 consist of marble, granite, onyx;
c) at least part of an exposed surface 14 of such material 1 is curved, in particular, in concave or convex manner.

Innovatively, the process of this invention allows obtaining a material of reduced thickness compared to stone materials currently used, at least at the same strength.

Advantageously, the process and covering material of this invention provide an aesthetically valuable material from the most significant observation angles.

Advantageously, especially but not exclusively with regard to variants comprising onyx, the reduction of the thickness and the materials used for reinforcement also increase transparency with possible improvements in the implementation of the back-lit elements or lighting devices.

Advantageously, the process and covering material of this invention allow obtaining a highly safe material, as the fabric is difficult to tear, and in any case breaks in a manner resilient in contrast to the slabs which, by their nature, break in a fragile manner.

Advantageously, the process of this invention has been specifically designed to prevent internal air inclusions, and provide complete adhesion between the different layers.

Advantageously, the process of this invention can be conducted at ambient temperature, so it is implementable on a large scale at low cost.

Advantageously, the process of this invention uses raw materials designed to ensure high mechanical strength with a proportionally contained investment cost.

According to an advantageous aspect of the invention, even the aesthetic characteristics of this material are superior to the known materials, as it is possible, without any difficulty, to work both faces of this material.

To the embodiments of the aforesaid process and composite material, one skilled in the art, in order to meet specific needs, may make variants or substitutions of elements with others functionally equivalent.

Even these variants are contained within the scope of protection, as defined by the following claims.

Moreover, each of the variants described as belonging to a possible embodiment can be realised independently of the other variants described.

## Claims

1. Process for manufacturing a composite material (1) comprising the steps of:
i.a) providing a pair of slabs (2, 4) made of natural stone;
i.b) optionally cleansing at least one development surface of each slab (2, 4);
ii) making one or more fabric layers (6) through the interweaving of a plurality of reinforcing fibres, such as glass fibres;
iii) applying an adhesive resin (8, 8') to at least part of the development surfaces of one or both slabs (2, 4) and/or on at least one development area of the fabric layer (6);
iv) arranging at least part of the fabric layer (6) between the slabs (2, 4), in contact with the adhesive resin (8, 8');
v) cross-linking the adhesive resin (8, 8') between said slabs (2, 4) to obtain the composite material (1);
said process being **characterized in that** the thickness of the slabs (2,4) is in the range 2.5 - 4 millimetres.

2. Process according to claim 1, wherein, in the case of a through-fracture (F, F') of at least one slab (2, 4), the adhesive contact with the fabric layer (6) confers a controlled detachment to the fractured slab portion (P) from said composite material (1), i.e. the fabric layer (6) is configured to gradually yield under the weight of the slab portion (P) by gradually stretching.

3. Process according to claim 1 or 2, wherein step iii) comprises a step of impregnation of the adhesive resin (8, 8') through at least part of the thickness of the fabric layer (6) and/or of at least one of the slabs (2, 4).

4. Process according to any of the preceding claims, wherein step iii) is carried out with a means or tool configured to transmit superficially to the adhesive resin (8, 8') alternating ridges (10) and valleys (12) that promote an expulsion of air between the adhesive resin (8, 8') and the slab (8, 8') and/or fabric layer (6).

5. Process according to any of the preceding claims, wherein step v) is carried out for at least 24 hours at ambient temperature, namely at a temperature not exceeding 35°C.

6. Process according to any of the preceding claims, wherein the adhesive resin (8, 8') comprises or consists of a bi-component epoxy resin.

7. Process according to any of the preceding claims, wherein one or both slabs (2, 4) consist of marble, granite, onyx.

8. Process according to any of the preceding claims, wherein the basis weight of the single fabric layer (6), or of the plurality of fabric layers (6), is in the range 100-500 g/m², preferably 200-400 g/m².

9. Composite material (1) directly obtained by the method of claims 1-8, comprising a pair of slabs (2, 4) made of natural stone, one or more fabric layers (6) comprising a plurality of interwoven reinforcing fibres, and an adhesive resin (8, 8') applied to at least part of the development surfaces of one or both slabs (2, 4) and/or on at least one development surface of the fabric layer (6);
wherein at least part of the fabric layer (6) is arranged between the slabs (2, 4) in contact with the adhesive resin (8, 8'), said resin being cross-linked between said slabs to make the composite material (1);
said composite material (1) being **characterized in that**
- the thickness of the slabs (2, 4) is in the range 2.5 - 4 millimetres, and
- the basis weight of the single fabric layer (6), or of the plurality of fabric layers (6), is in the range 100 - 500 g/m², preferably 200 - 400 g/m².

10. Composite material according to the preceding claim, wherein, in the case of a through-fracture (F, F') of at least one slab (2, 4), the adhesive contact with the fabric layer (6) attributes a controlled detachment to the fractured slab portion (P) from said composite material (1), i.e. the fabric layer (6) is configured to gradually yield under the weight of the slab portion (P) by gradually stretching.

11. Composite material according to any of claims 9-10, wherein the adhesive resin (8, 8') comprises or consists of a bi-component epoxy resin.

12. Composite material according to any of claims 9-11, wherein one or both slabs (2, 4) consist of marble, granite, onyx.

13. Composite material according to any of claims 9-12, wherein at least part of an exposed surface (14) of said material (1) is curved, in a concave or convex manner.

## Patentansprüche

1. Prozess zur Herstellung eines Kompositmaterials (1), umfassend die folgenden Schritte:
i.a) Vorsehen eines Paars Platten (2, 4), die aus Naturstein gefertigt sind;
i.b) wahlweises Reinigen zumindest einer Entwicklungsfläche jeder Platte (2, 4);
ii) Fertigen einer oder mehrerer Gewebeschichten (6) durch das Verweben einer Vielzahl von Verstärkungsfasern, wie etwa Glasfasern;
iii) Aufbringen eines Klebharzes (8, 8') auf zumindest einen Teil der Entwicklungsflächen einer oder beider Platten (2, 4) und/oder auf zumindest einen Entwicklungsbereich der Gewebeschicht (6);
iv) Anordnen zumindest eines Teils der Gewebeschicht (6) zwischen den Platten (2, 4), in Kontakt mit dem Klebharz (8, 8');
v) Vernetzen des Klebharzes (8, 8') zwischen den Platten (2, 4), um das Kompositmaterial (1) zu erhalten;
wobei der Prozess **dadurch gekennzeichnet ist, dass** die Dicke der Platten (2, 4) im Bereich von 2,5-4 Millimetern liegt.

2. Prozess nach Anspruch 1, wobei, im Fall eines durchgehenden Bruchs (F, F') in zumindest einer Platte (2, 4), der klebende Kontakt mit der Gewebeschicht (6) eine gesteuerte bzw. geregelte Ablösung von dem Kompositmaterial (1) an den gebrochenen Plattenabschnitt (P) überträgt, d. h. die Gewebeschicht (6) ausgestaltet ist, unter dem Gewicht des Plattenabschnitts (P) durch allmähliches Dehnen allmählich nachzugeben.

3. Prozess nach Anspruch 1 oder 2, wobei Schritt iii) einen Schritt der Imprägnierung des Klebharzes (8, 8') durch zumindest einen Teil der Dicke der Gewebeschicht (6) und/oder zumindest eine der Platten (2, 4) umfasst.

4. Prozess nach einem der vorhergehenden Ansprüche, wobei Schritt iii) mit einem Mittel oder Werkzeug ausgeführt wird, das ausgestaltet ist, sich abwechselnde Grate (10) und Vertiefungen (12) oberflächlich auf das Klebharz (8, 8') zu übertragen, die ein Ausstoßen von Luft zwischen dem Klebharz (8, 8') und der Platte (8, 8') und/oder Gewebeschicht (6) fördern.

5. Prozess nach einem der vorhergehenden Ansprüche, wobei Schritt v) über mindestens 24 Stunden bei Umgebungstemperatur, nämlich einer Temperatur, die 35 °C nicht übersteigt, ausgeführt wird.

6. Prozess nach einem der vorhergehenden Ansprüche, wobei das Klebharz (8, 8') ein Zweikomponenten-Epoxidharz umfasst oder daraus besteht.

7. Prozess nach einem der vorhergehenden Ansprüche, wobei eine oder beide Platten (2, 4) aus Marmor, Granit, Onyx bestehen.

8. Prozess nach einem der vorhergehenden Ansprüche, wobei das Grundgewicht der einzelnen Gewebeschicht (6) oder der Vielzahl von Gewebeschichten (6) im Bereich von 100-500 g/m², vorzugsweise 200-400 g/m² liegt.

9. Kompositmaterial (1), das direkt durch das Verfahren nach den Ansprüchen 1-8 erhalten wird, umfassend ein Paar Platten (2, 4), die aus Naturstein gefertigt sind, eine oder mehrere Gewebeschichten (6), die eine Vielzahl von verwebten Verstärkungsfasern umfassen, und ein Klebharz (8, 8'), das auf zumindest einen Teil der Entwicklungsflächen einer oder beider Platten (2, 4) und/oder auf zumindest eine Entwicklungsfläche der Gewebeschicht (6) aufgebracht ist;
wobei zumindest ein Teil der Gewebeschicht (6) zwischen den Platten (2, 4) in Kontakt mit dem Klebharz (8, 8') angeordnet ist, wobei das Harz zwischen den Platten vernetzt ist, um das Kompositmaterial (1) zu fertigen;
wobei das Kompositmaterial (1) **dadurch gekennzeichnet ist, dass**
- die Dicke der Platten (2, 4) im Bereich von 2,5-4 Millimeter liegt, und
- das Grundgewicht der einzelnen Gewebeschicht (6) oder der Vielzahl von Gewebeschichten (6) im Bereich von 100-500 g/m², vorzugsweise 200-400 g/m² liegt.

10. Kompositmaterial nach dem vorhergehenden Anspruch, wobei, im Fall eines durchgehenden Bruchs (F, F') in zumindest einer Platte (2, 4), der klebende Kontakt mit der Gewebeschicht (6) eine gesteuerte bzw. geregelte Ablösung von dem Kompositmaterial (1) für den gebrochenen Plattenabschnitt (P) beiträgt, d. h. die Gewebeschicht (6) ausgestaltet ist, unter dem Gewicht des Plattenabschnitts (P) durch allmähliches Dehnen allmählich nachzugeben.

11. Kompositmaterial nach einem der Ansprüche 9-10, wobei das Klebharz (8, 8') ein Zweikomponenten-Epoxidharz umfasst oder daraus besteht.

12. Kompositmaterial nach einem der Ansprüche 9-11, wobei eine oder beide Platten (2, 4) aus Marmor, Granit, Onyx bestehen.

13. Kompositmaterial nach einem der Ansprüche 9-12, wobei zumindest ein Teil einer freiliegenden Fläche (14) des Materials (1) in einer konkaven oder konvexen Weise gekrümmt ist.

## Revendications

1. Procédé pour la production d'un matériel composite (1), comprenant les étapes de :
i.a) mettre à disposition une paire de plaques (2, 4) en une pierre naturelle,
i.b) nettoyer, en option, au moins une surface de développement de chaque plaque (2, 4),
ii) produire une ou davantage de couches de tissu (6) par l'entrelacement d'une pluralité de fibres de renforcement telles que des fibres de verre,
iii) appliquer une résine adhésive (8, 8') sur au moins une partie des surfaces de développement d'une ou des deux plaques (2, 4) et/ou sur au moins une zone de développement de la couche de tissu (6),
iv) agencer au moins une partie de la couche de tissu (6) entre les plaques (2, 4), en contact avec la résine adhésive (8, 8'),
v) réticuler la résine adhésive (8, 8') entre les plaques (2, 4) pour obtenir le matériel composite (1),
le procédé étant **caractérisé en ce que** l'épaisseur des plaques (2, 4) est dans la plage de 2,5 à 4 millimètres.

2. Procédé selon la revendication 1, **caractérisé en ce que**, dans le cas d'une fracture traversante (F, F') d'au moins une plaque (2, 4), le contact adhésif avec la couche de tissu (6) confère un détachement contrôlé à la partie de plaque fracturée (P) du matériel composite (1), c'est-à-dire la couche de tissu (6) est configurée pour céder graduellement sous le poids de la partie de plaque (P) par extension graduelle.

3. Procédé selon la revendication 1 ou 2, **caractérisé en ce que** l'étape iii) comprend une étape d'imprégnation de la résine adhésive (8, 8') à travers au moins une partie de l'épaisseur de la couche de tissu (6) et/ou d'au moins une des plaques (2, 4).

4. Procédé selon l'une des revendications précédentes, **caractérisé en ce que** l'étape iii) est mise en œuvre avec un moyen ou un outil configuré pour donner à la résine adhésive (8, 8') en surface des crêtes (10) et des creux (12) en alternance qui favorisent une expulsion d'air entre la résine adhésive (8, 8') et la plaque (8, 8') et/ou la couche de tissu (6).

5. Procédé selon l'une des revendications précédentes, **caractérisé en ce que** l'étape v) est mise en œuvre pendant au moins 24 heures à température ambiante, c'est-à-dire une température ne dépassant pas 35 °C.

6. Procédé selon l'une des revendications précédentes, **caractérisé en ce que** la résine adhésive (8, 8') comprend ou est constituée d'une résine époxy bi-composant.

7. Procédé selon l'une des revendications précédentes, **caractérisé en ce qu'**une ou les deux plaques (2, 4) sont constituées de marbre, de granite ou d'onyx.

8. Procédé selon l'une des revendications précédentes, **caractérisé en ce que** le poids de base de la couche de tissu individuelle (6), ou de la pluralité de couches de tissu (6), est dans la plage de 100 à 500 g/m², de préférence de 200 à 400 g/m².

9. Matériel composite (1) directement obtenu par le procédé selon les revendications 1 à 8, comprenant une paire de plaques (2, 4) faites en une pierre naturelle, une ou davantage de couches de tissu (6) comportant une pluralité de fibres de renforcement entrelacées et une résine adhésive (8, 8') appliquée sur au moins une partie des surfaces de développement d'une ou des deux plaques (2, 4) et/ou sur au moins une surface de développement de la couche de tissu (6),
au moins une partie de la couche de tissu (6) étant agencée entre les plaques (2, 4) en contact avec la résine adhésive (8, 8'), la résine étant réticulée entre les plaques pour obtenir le matériel composite (1),
le matériel composite (1) étant **caractérisé en ce que**
- l'épaisseur des plaques (2, 4) est dans la plage de 2,5 à 4 millimètres et
- le poids de base de la couche de tissu individuelle (6), ou de la pluralité de couches de tissu (6), est dans la plage de 100 à 500 g/m², de préférence de 200 à 400 g/m².

10. Matériel composite selon la revendication précédente, **caractérisé en ce que**, dans le cas d'une fracture traversante (F, F') d'au moins une plaque (2, 4), le contact adhésif avec la couche de tissu (6) confère un détachement contrôlé à la partie de plaque fracturée (P) du matériel composite (1), c'est-à-dire la couche de tissu (6) est configurée pour céder graduellement sous le poids de la partie de plaque (P) par extension graduelle.

11. Matériel composite selon l'une des revendications 9 à 10, **caractérisé en ce que** la résine adhésive (8, 8') comprend ou est constituée d'une résine époxy bi-composant.

12. Matériel composite selon l'une des revendications 9 à 11, **caractérisé en ce qu'**une ou les deux plaques (2, 4) sont constituées de marbre, de granite ou d'onyx.

13. Matériel composite selon l'une des revendications 9 à 12, **caractérisé en ce qu'**au moins une partie d'une surface exposée (14) du matériel (1) est courbée d'une façon concave ou convexe.
